# EUROPEAN PATENT SPECIFICATION

(11) **EP 3 863 296 B1**
(45) Date of publication and mention of the grant of the patent: **22.11.2023**
(21) Application number: 21165519.6
(22) Date of filing: 11.09.2017
(51) Int. Cl.: H04N 21/854, H04N 21/231, H04N 21/6587, H04N 21/845, H04N 21/81, H04N 21/218, H04N 21/2343, H04N 21/4728

(54) **STREAMING FRAMES OF SPATIAL ELEMENTS TO A CLIENT DEVICE**
STREAMING-RAHMEN VON RÄUMLICHEN ELEMENTEN AN EINE CLIENT-VORRICHTUNG
TRAMES DE TRANSMISSION EN CONTINU D'ÉLÉMENTS SPATIAUX À UN DISPOSITIF CLIENT

(43) Date of publication of application: 11.08.2021
(62) Divisional of application: 17190314.9
(73) Proprietor: Tiledmedia B.V., 3061 BC Rotterdam (NL)
(72) Inventor: VAN BRANDENBURG, Ray, 3061 BC Rotterdam (NL); KLOK, Frederik Harm, 3061 BC Rotterdam (NL); KOENEN, Robert Hendrik, 3061 BC Rotterdam (NL); VEENHUIZEN, Arjen Timotheus, 3061 BC Rotterdam (NL)
(74) Representative: De Vries & Metman

(56) References cited:
- WO-A1-2016/113458
- WO-A1-2017/029402
- US-A1- 2015 358 418
- US-A1- 2016 182 927
- "Study of ISO/IEC DIS 23000-20 Omnidirectional Media Format", 119. MPEG MEETING;17-7-2017 - 21-7-2017; TORINO; (MOTION PICTURE EXPERT GROUP OR ISO/IEC JTC1/SC29/WG11),, no. N16950, 26 August 2017 (2017-08-26), XP030023613,
- TAGHAVINASRABADI AFSHIN ET AL: "Adaptive 360-degree video streaming using layered video coding", 2017 IEEE VIRTUAL REALITY (VR), IEEE, 18 March 2017 (2017-03-18), pages 347-348, XP033083975, DOI: 10.1109/VR.2017.7892319

## Description

### Field of the invention

The invention relates to methods of transmitting a request for video data and methods of transmitting video data.

The invention further relates to a client device for transmitting a request for video data and a distribution node for transmitting video data.

The invention also relates to a computer program product and a signal enabling a computer system to perform such methods.

### Background of the invention

The increasing availability and use of Virtual Reality headsets has given rise to cameras that support new video formats, such as those that can record full 360-degree spherical video (often referred to as VR360 or 360VR video). Content recorded by such cameras is not only consumed in VR headsets, but is also made available on regular displays, where users can use their fingers, gestures or their mouse to navigate in the video.

Collectively referred to as 'immersive' video, there exists a wide variety of such new video formats, with more variants reaching the market every day. Some of these are cylindrical versus spherical in nature. Others record in 180 or 270 degree instead of the full 360. There are several different approaches to 3D, with some cameras being monoscopic, others stereoscopic and even others being partially stereoscopic (with only a certain area of the video being recorded stereoscopically, with the rest recorded monoscopically).

Regardless of the exact format, what binds these different content formats together is the fact that a user typically only views a small area of the video at any given time. With a significant percentage of immersive video being viewed through VR headsets, where the display is very close to the human eye, the resolution of the recorded video needs to be very high in order to not come across as pixelated (and thus low quality) to the end user. This poor quality seriously impedes the end-user quality of experience.

For traditional video being displayed on a smartphone or tablet, HD resolutions (1920x1080 pixels) are considered to be sufficient for the user to not being able to notice individual pixels. Large TVs screens obviously need a higher resolution when viewed up close, which is the reason newer TVs typically support Ultra HD (3840x2160 pixels; also referred to as 4K, because it has roughly 4000 horizontal pixels) resolutions. Even higher resolutions are generally considered to be unnoticeable to end users.

The same cannot be said for VR headsets though. Due to the closeness of the human eye to the display in a VR headset, the pixel size needs to be much smaller for the user not to be able to discern them. Because of this, the resolution of VR displays, and thus the content being shown on them, needs to be of significantly higher quality (resolution). Research has suggested that a VR headset will need to display video at roughly 8k horizontal pixels per eye (making the total display resolution 8 times UHD, or 32 times HD) for the individual pixels to no longer be visible to the end user. And given that users only ever see a small part of a 360-degree video at the same time, this means that the total resolution being recorded will need to be in the order of 32000 pixels horizontally and 16000 vertically (32k x 16k), so two orders of magnitude higher than what most traditional video content is being recorded at today. While today's cameras are not able to record 32K video, 8K and 12K cameras are starting to become available.

The primary factor limiting immersive video quality however, is not so much the camera technology, but the distribution technology. Sending traditional UHD video, or even high-quality HD, over the current internet, is not only very complex and expensive, it is also limited to those countries and users that have a sufficiently fast internet connection. With immersive video requiring an even higher quality video, distribution of immersive media is a big challenge.

There currently exists a variety of distribution methods for delivering immersive video. The first and most-used at this moment is also the simplest one, which is simply delivering the immersive video to the client as if it were a normal traditional video. This means the full spherical video is being delivered to the client, decoded on the end-user device, and projected on the VR headset. The advantage of this method is that it re-uses existing technology and distribution methods, and that no new techniques are required. The downside is that it is either very expensive in terms of bandwidth (given that an immersive video will typically be of higher resolution than a traditional video), which will reduce reach and increase cost, or low in quality (if the quality is degraded to accommodate for lower bandwidth).

A second group of approaches, and one that is increasingly explored in the research community, is also referred to as 'viewport-adaptive streaming'. While there exist several different approaches for viewport-adaptive streaming, each with its own advantages and drawbacks, the most scalable and promising is called tiled streaming. Tiled streaming is described in US 2017/0155912 A1, for example. With tiled streaming, the original immersive video (whether it is cylindrical, spherical, or otherwise) is split up into individual spatial elements and each frame of the video is split up into individual spatial-element frames. Since the spatial-elements are rectangles, the spatial elements and/or the spatial-element frames are referred to as "tiles". Each spatial-element frame is then independently encoded in such a way that it can be successfully decoded on the client side without the client requiring access to the other spatial-element frames. By successively retrieving individual spatial-element frames based on the user's field of view, the client is able to only retrieve and decode the area of the video that the user is interested in. By only streaming the area of the immersive video that the user is interested in, the total bandwidth necessary to distribute the immersive video can be reduced significantly. This reduction in bandwidth can either be used to increase reach (meaning a higher percentage of users will have sufficient bandwidth to receive the streaming video) and reduce cost (less bits transferred), or to increase quality, or to achieve a combination of these goals. By only sending a small portion of the video at any given time, that region can be sent at a higher quality than would normally have been possible without increasing bandwidth.

A drawback of this approach is the time it takes for the client to retrieve the appropriate spatial-element frames from the network when the user turns his head. The end to end latency between the user turning his head and the spatial-element frames being fetched from the network and displayed in the headset, also referred to as the motion-to-photon latency, significantly impacts the Quality of Experience (QoE). Latencies as little as 100 milliseconds can already make for a lower user QoE.

Most tiled streaming approaches discussed in the state-of-the-art are based on, or are an extension of, HTTP Adaptive Streaming. With HTTP Adaptive Streaming, of which MPEG DASH and Apple HLS are the dominant examples, a video stream is cut up into temporal elements, called segments, each typically between 3 and 30 seconds long. When watching a video, a client sequentially fetches successive segments from the network via standard HTTP, buffers them, and feeds them to the video decoder. Where HTTP Adaptive Streaming gets its name from is that each segment can be made available in multiple different qualities/resolutions (called "representations"), with the client able to switch between the different qualities based on the available bandwidth. Switching quality (due to changing network link conditions) would typically happen at segment boundaries.

When applied to tiled streaming, each spatial element is typically represented as an independent video stream, where each spatial element is itself split up into multiple temporal segments of spatial-element frames. A common manifest file [e.g. DASH-SRD: ISO/IEC 23009-1:2014], or container format then contains pointers to the individual segments of spatial-element frames and describes their temporal and spatial relationship. From a client point of view, the client first downloads and parses the manifest file and then sets up multiple HTTP Adaptive Streaming sessions, one for each spatial element. Each session will consist of sequentially downloading successive segments. When a user turns his head, the HTTP Adaptive Streaming sessions for those spatial elements no longer in the field of view will be cancelled, and new ones will be started for the spatial elements that just entered the field of view.

While HTTP Adaptive Streaming is well suited for traditional video streaming, it is less suited for tiled streaming, primarily because of latency. When a user turns his head with a VR headset, the human vestibular system expects the view captured by the eyes to move along accordingly. When this doesn't happen, or doesn't happen fast enough, motion sickness occurs very quickly. Research has shown that this problem already occurs if the delay between head movement and the eyes registering the appropriate movement is more than 8-10ms. This means that spatial-element frames need to be retrieved very fast, or that some visual information is needed that is always present and that can be displayed in a way that is consistent with a user's head movement.

Given that 8-10ms is an extremely short time for a system to respond to sensor data, fetch video data over the internet, decode that data and show it to the end-user, this is typically not achieved in HTTP Adaptive Streaming-based tiled streaming solutions. It is possible to work around this by 1) always downloading a field of view that is larger than that which is experienced by the end-user, thereby creating a sort of spatial buffer, and 2) always streaming a low-resolution fallback/base layer that can be shown while the system waits for the high-resolution tiles to arrive.

While this approach works, it has two significant drawbacks. First, creating a spatial buffer that contains data outside the field of view of the user goes directly against the entire idea of tiled streaming, which was to reduce required bandwidth by only downloading that part of the viewport which is necessary. In other words, it reduces the gains made by using a tiled streaming solution in the first place. Second, while a low-resolution fallback at least shows the user some visuals to reduce or eliminate motion-sickness by keeping the motion-to-photon latency at a minimum, watching a low-quality stream for a significant period of time (e.g. anything more than a 100ms or so) every time a user moves his head is not a particularly good quality of experience, especially because users tend to move their head frequently when consuming immersive video. In this situation, the motion-to-photon latency is sufficient, but the "motion-to-high-res" latency, i.e. the end to end latency between the user turning his head and the high-resolution spatial-element frames being fetched from the network and displayed in the headset, is often insufficient.

US2016/182927 A1 discloses transmitting tiled timed media data (e.g. video data) comprising timed samples (e.g. images) as a set of several timed media data tracks, typically a base layer track and several tile tracks (e.g. of a 4K2K enhancement layer), and a reference or composite track that comprises references to timed media data tracks. Each track can be transmitted from a server device to a client device as a set of media segment files.

WO 2017/029402 A1 discloses a method that comprises a client computer requesting transmission of a first tile stream and a second tile stream originating from different content sources and the client computer combining the first tile stream and the second tile stream into a bitstream that is decodable by a decoder, e.g. in the client computer.

### Summary of the invention

It is a first object of the invention to provide a method of transmitting video data, which helps a client device receive high-resolution spatial-element frames fast enough to achieve a low motion-to-high-res latency.

It is a second object of the invention to provide a distribution node for transmitting video data, which helps a client device receive high-resolution spatial-element frames fast enough to achieve a low motion-to-high-res latency.

To that end, one aspect of the disclosure pertains to a method of transmitting video data as claimed in claim 1 and another aspect of the disclosure pertains to a distribution node as claimed in claim 5.

In a first aspect of the invention, a method of transmitting video data comprises receiving a request to obtain a part of a file from a requestor, said request identifying said file, said file comprising a plurality of spatial-element frames of a spatial element of a compressed video, said compressed video comprising a plurality of spatial elements, locating said file in a memory, obtaining data from said file located in said memory, and transmitting said data to said requestor.

The method is characterized in that said requestor is a cache node, said request specifies a starting position in said file and further specifies an ending position in said file, said data is obtained from said specified starting position until said specified ending position, and said data comprises two or more temporal segments of spatial-element frames of the same resolution relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only intra-coded spatial-element frames, said intra-coded spatial-element frames not being encoded with reference to one or more other spatial-element frames of said plurality of spatial-element frames.

Said two or more temporal segments of spatial-element frames are stored within a distance of a Content Delivery Network chunk size of each other in said file, said two or more temporal segments are located within a distance of a Content Delivery Network chunk size of each other in said transmitted data, a size of each of said two or more temporal segments depends on said Content Delivery Network chunk size, and the difference between said ending position and said starting position is a multiple of said Content Delivery Network chunk size. Said method may be performed by software running on a programmable device. This software may be provided as a computer program product.

A single request may specify one or more spatial elements. Thus, the invention allows, but does not require a separate request to be transmitted for each of the spatial elements. The non-inter-coded first one or more spatial-element frames of the temporal segment of spatial-element frames may originate from a group of spatial-element frames which comprises only non-inter-coded spatial-element frames or from a group of spatial-element frames which comprises inter-coded spatial-element frames as well as one or more non-inter-coded spatial-element frames. The distribution node may be an origin node or a cache node, for example. The spatial elements may be rectangular or some or all spatial elements may have a different shape, e.g. an ellipse shape.

Non-inter-coded spatial-element frames are spatial-element frames which are not encoded temporally, but only spatially (i.e. intra-coded), e.g. I-frames. Inter-coded spatial-element frames are spatial-element frames which are encoded spatially as well as temporally, e.g. P-frames or B-frames. P-frames can comprise predicted macroblocks. B-frames can comprise predicted and bi-predicted macroblocks.

By having the client device specify the starting position as a position in a file, e.g. in an HTTP byte-range request, most of the intelligence may be placed in the client device. This allows distribution nodes to process requests for more users with the same hardware. By organizing the file as specified above, the way Content Delivery Networks caches work can be exploited in order to increase the chances that the requested non-inter-coded spatial-element frame is cached, thereby decreasing the time it takes to retrieve this non-inter-coded spatial-element frame, and thus the motion-to-high-res latency, even further.

Large scale content distribution over the internet is generally carried out through Content Delivery Networks, or CDNs. A CDN architecture typically consists of a minimum of two layers, with the lowest layer consisting of CDN edge caches that are placed relatively close to end-users, and the highest layer consisting of the origin distribution node on which all content is stored and which is stored at a central location. Some, but not all, CDNs place one or more other layers between these two extremes to provide intermediate caching and reduce load on the origin.

The process of a client device retrieving data from a CDN is as follows: through a system of redirection, the initial request for data ends up at a CDN edge node close to the location of the client. The edge node checks whether the requested data is in its cache and, if so, responds with the data. If the data is not in the cache, the edge node contacts the next, higher layer in the CDN architecture for the data. Once the request arrives at a point where the data is available (with the origin being the final location), the data trickles back to the edge node which then forwards it back to the client.

From a latency point of view, the ideal situation is the CDN edge node already having cached the spatial-element frame required by the client. However, given the characteristics of tiled streaming (streaming of rectangular spatial-element frames), the chances of this happening will be relatively small compared to traditional video. There are several reasons for this: 1) given that each client device normally only receives spatial-element frames of those spatial elements of the video that the user is viewing, the CDN edge node will only have cached those spatial-element frames of those spatial elements in the video that any particular user in the edge nodes serving area has accessed recently. Depending on the length and popularity of the content, the chances of every spatial-element frame of every spatial element having been streamed during the cache's cache window will be very slim except for the most popular content. 2) given the large total aggregate size of the immersive video compared to traditional content, and the relatively low frequency with which specific spatial-element frames of specific spatial elements are accessed, the CDN edge's caching strategy is more likely to purge (some) less frequently used spatial-element frame data relatively soon from its cache.

This problem is worsened by the fact that non-inter-coded spatial-element frames (e.g. I-frames) on which no other spatial-element frame (e.g. B-frame or P-frame) depends will normally be accessed relatively infrequently, which means that the probability that the second one of the two or more temporal segments of spatial-element frames, comprising only non-inter-coded spatial-element frames, is cached is likely even lower. When data for a given request is not cached, the CDN edge node will first have to retrieve the data from the origin, or another higher layer entity, which will significantly impact the time it takes to retrieve the data, and therefore the motion-to-high-res latency. Since the probability that the second one of the two or more temporal segments of spatial-element frames is cached in the CDN edge node is low, there is a significant chance of that data having to come from a higher-layer CDN node, and therefore resulting in a higher motion-to-high-res latency.

By storing the two or more temporal segments near each other in the file, the way CDN caches work, and the way they handle HTTP byte range requests, can be exploited. An HTTP Byte Range Request can be of arbitrary size, from requesting a single byte to an open-ended request where transfer is started from a certain byte range offset up until the file or the connection ends. However, given that both these extremes pose challenges for the communication between a CDN edge node and the higher layer CDN nodes, a byte range request is typically transformed before it is passed up to a higher layer CDN node in case of a cache miss. Most CDNs do this by working with fixed size chunks between the different nodes, e.g. of 2000Kbyte (or 2Mbyte). This will be referred to as "CDN chunking behavior". For example, when a client requests bytes 200-850 and there is a cache miss, the CDN cache may request bytes 0-2000k from the origin, while only sending bytes 200-850 on to the client. Similarly, still assuming a 2Mbyte internal chunk size, when requesting bytes 1980k-2010k, the CDN edge node may request 0-4000k from the origin.

How near said two or more temporal segments should preferably be stored in said file depends on the configured CDN chunking behavior and the size of the temporal segments. The size of the temporal segments should preferably also depend on the configured CDN chunking behavior. For example, when temporal segments of spatial-element frames relating to at least partly overlapping time periods are stored (and therefore transmitted) sequentially and two or three consecutive temporal segments fit into one chunk, this should already substantially increase the probability that a requested non-inter-coded spatial-element frame is cached.

Said two or more temporal segments of spatial-element frames may be stored sequentially in said file. Sequentially storing the two or more temporal segments of spatial-element frames may be used to ensure that they are stored near each other.

Said first one of said two or more temporal segments of spatial-element frames may comprise, for example, at most one or two non-inter-coded spatial-element frames. By alternating each one or two regular Group of Pictures comprising an I-frame and several P-frames with a temporal segment comprising only I- frames, for example, the temporal segments will normally have an appropriate size to benefit from the afore-mentioned CDN chunking behaviour. Said two or more temporal segments of spatial-element frames may substantially correspond to the same uncompressed video data.

Said request may specify a further starting position and said method may further comprise obtaining further data from said file located in said memory starting at said specified further starting position, said further data comprising two or more further temporal segments of spatial-element frames relating to at least partly overlapping time periods, said spatial-element frames of said two or more further temporal segments each comprising a plurality of video pixels, at least a first one of said two or more further temporal segments of spatial-element frames comprising inter-coded spatial-element frames and at least a second one of said two or more further temporal segments of spatial-element frames comprising only non-inter-coded spatial-element frames, and transmitting said further data to said cache node. In this way, the requestor, e.g. the CDN edge node, may request a plurality of temporal segments corresponding to non-overlapping time periods at the same time, thereby reducing the number of requests. This is beneficial, because there is a cost involved with each request, both in time as well as in bytes (e.g. each request may carry several HTTP headers).

In a second aspect of the invention, a distribution node comprises at least one receiver, at least one transmitter, and at least one processor configured to use said at least one receiver to receive a request to obtain a part of a file from a requestor, said request identifying said file, said file comprising a plurality of spatial-element frames of a spatial element of a compressed video, said compressed video comprising a plurality of spatial elements, locate said file in a memory, obtain data from said file located in said memory, and use said at least one transmitter to transmit said data to said requestor,

The distribution node is characterized in that said requestor is a cache node, said request specifies a starting position in said file and further specifies an ending position in said file, said data is obtained from said specified starting position until said specified ending position, and said data comprises two or more temporal segments of spatial-element frames of the same resolution relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only intra-coded spatial-element frames, said intra-coded spatial-element frames not being encoded with reference to one or more other spatial-element frames of said plurality of spatial-element frames,

Said two or more temporal segments of spatial-element frames are stored within a distance of a Content Delivery Network chunk size of each other in said file, said two or more temporal segments are located within a distance of a Content Delivery Network chunk size of each other in said transmitted data, a size of each of said two or more temporal segments depends on said Content Delivery Network chunk size, and the difference between said ending position and said starting position is a multiple of said Content Delivery Network chunk size.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a first software code portion, the first software code portion, when executed or processed by a computer, being configured to perform executable operations for transmitting video data.

The executable operations comprise receiving a request to obtain a part of a file from a requestor, said request identifying said file, said file comprising a plurality of spatial-element frames of a spatial element of a compressed video, said compressed video comprising a plurality of spatial elements, locating said file in a memory, obtaining data from said file located in said memory, and transmitting said data to said requestor.

Said requestor is a cache node, said request specifies a starting position in said file and further specifies an ending position in said file, said data is obtained from said specified starting position until said specified ending position, and said data comprises two or more temporal segments of spatial-element frames of the same resolution relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only intra-coded spatial-element frames, said intra-coded spatial-element frames not being encoded with reference to one or more other spatial-element frames of said plurality of spatial-element frames.

Said two or more temporal segments of spatial-element frames are stored within a distance of a Content Delivery Network chunk size of each other in said file, said two or more temporal segments are located within a distance of a Content Delivery Network chunk size of each other in said transmitted data, a size of each of said two or more temporal segments depends on said Content Delivery Network chunk size, and the difference between said ending position and said starting position is a multiple of said Content Delivery Network chunk size.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the Drawings

These and other aspects of the invention are apparent from and will be further elucidated, by way of example, with reference to the drawings, in which:
- Fig. 1 is a block diagram of an embodiment of the client device of the invention
- Fig. 2 is a block diagram of a first embodiment of the distribution node of the invention;
- Fig. 3 is a block diagram of a second embodiment of the distribution node of the invention;
- Fig. 4 illustrates a tiled video streaming method in which no specific bytes of a file can be requested;
- Fig. 5 depicts a conventional structure of a video segment;
- Fig. 6 is a flow diagram of a first embodiment of the methods of the invention;
- Fig. 7 is a flow diagram of a second embodiment of the method carried out by the client device;
- Fig. 8 depicts a file comprising inter-coded spatial-element frames and a file comprising only non-inter-coded spatial-element frames;
- Fig.9 depicts indices for the files of Fig.8;
- Fig.10 illustrates the methods of Fig.6 being used with the files of Fig.8;
- Fig.11 shows an example of spatial-elements which are in view and the different frame types being obtained for these spatial-elements;
- Fig.12 depicts an example of a file structure in which segments comprising inter-coded spatial-element frames and segments comprising only non-inter-coded spatial-element frames are interleaved;
- Fig.13 illustrates how the file structure of Fig.12 makes use of the behavior of CDN cache nodes; and
- Fig. 14 is a block diagram of an exemplary data processing system for performing the methods of the invention.

Corresponding elements in the drawings are denoted by the same reference numeral.

### Detailed description of the Drawings

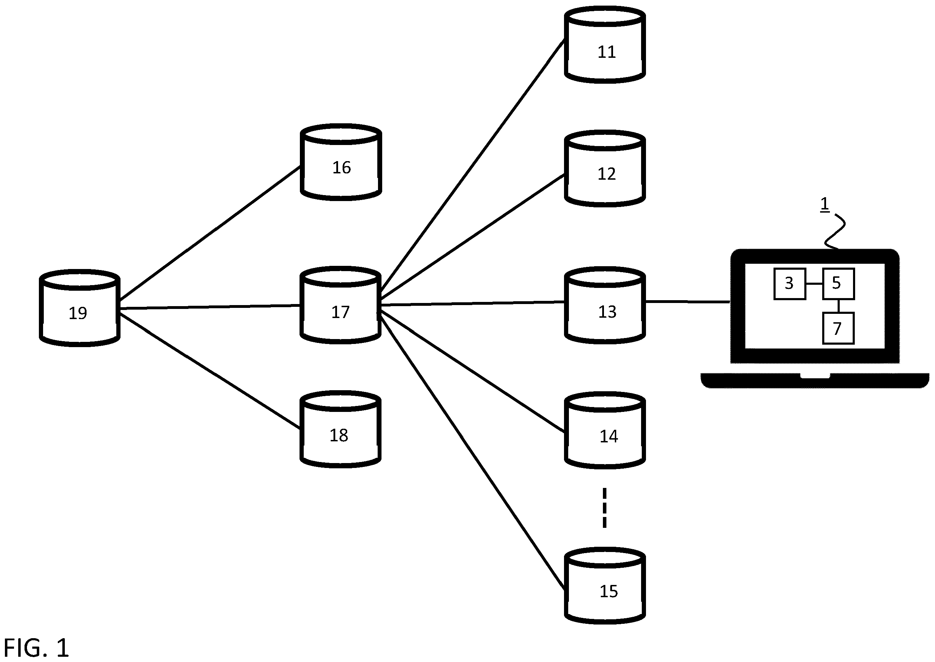

The client device **1** comprises a transceiver **3,** a processor **5** and a memory **7,** see **Fig. 1****.** The processor **5** is configured to use the transceiver **3** to transmit one or more requests for high-resolution spatial-element frames of the spatial element of the video to a distribution node for each spatial element of a video in a user's field of view for which the client device does not possess a current high-resolution spatial-element frame. The video comprises a plurality of spatial elements and a plurality of spatial-element frames for each of the plurality of spatial elements. The plurality of spatial-element frames comprises both non-inter-coded spatial-element frames (e.g. I-frames) and inter-coded spatial-element frames (e.g. B and P frames). The one or more requests identify the spatial element and specify a starting point corresponding substantially to a current time and the one or more requests are for data comprising a temporal segment of high-resolution spatial-element frames starting substantially at the starting point. The first high-resolution spatial-element frame of the temporal segment of high-resolution spatial-element frames is not inter coded.

The client device **1** is connected to a content distribution network (CDN) and transmits the one or more requests addressed to the origin node **19.** The one or more requests arrive at the edge cache **13,** e.g. through redirection. The edge cache node **13** checks whether it can fulfill the one or more requests itself and transmits an own request for any spatial-element frames not in its cache to higher-layer cache node **17.** The higher-layer cache node **17** checks whether it can fulfill the one or more requests itself and transmits an own request for any spatial-element frames not in its cache to origin node **19.** The network shown in **Fig.1** comprises other distribution nodes than edge cache node **13,** higher-layer cache node **17** and origin node **19.** Edge cache nodes **11-12** and **14-15** and higher-layer cache nodes **16** and **17** are present, but are not in the path between client device **1** and origin node **19.** The edge cache nodes **11-14** may be the edge cache nodes for Ireland, Germany, France and Spain, for example. The higher-layer cache nodes **16-18** may be the higher-layer cache nodes for the U.S., Europe and Asia regions, for example.

The processor **5** is further configured to use the transceiver **3** to receive data relating to a spatial element of the video from the distribution node in response to the one or more requests for each of the spatial elements for which the one or more requests is transmitted. The data comprises a temporal segment of high-resolution spatial-element frames starting substantially at the starting point. The high-resolution spatial-element frames of the temporal segment each comprise a plurality of video pixels. The first one or more high-resolution spatial-element frames of the temporal segment of high-resolution spatial-element frames are not inter coded.

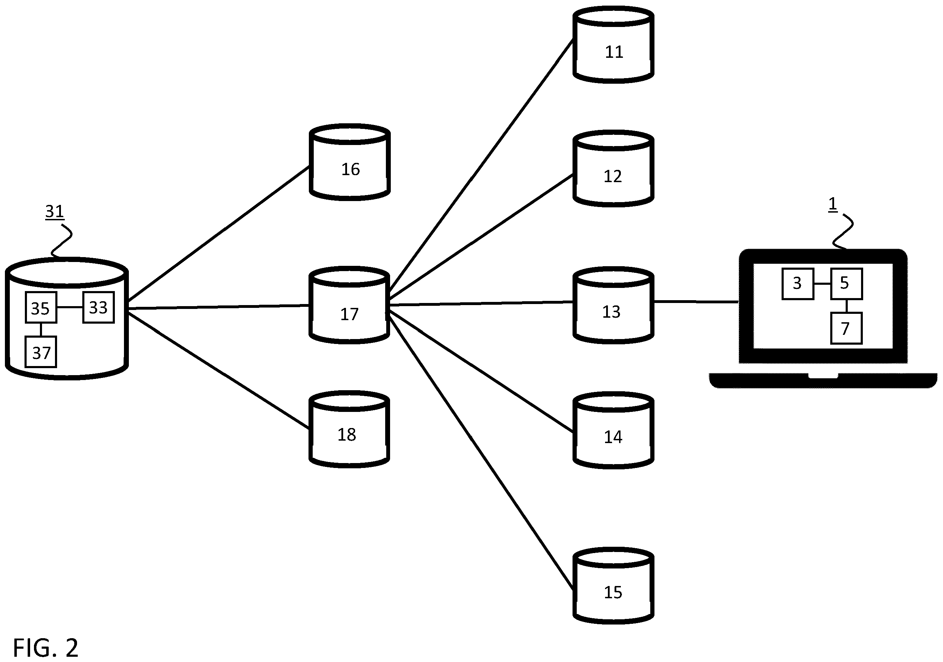

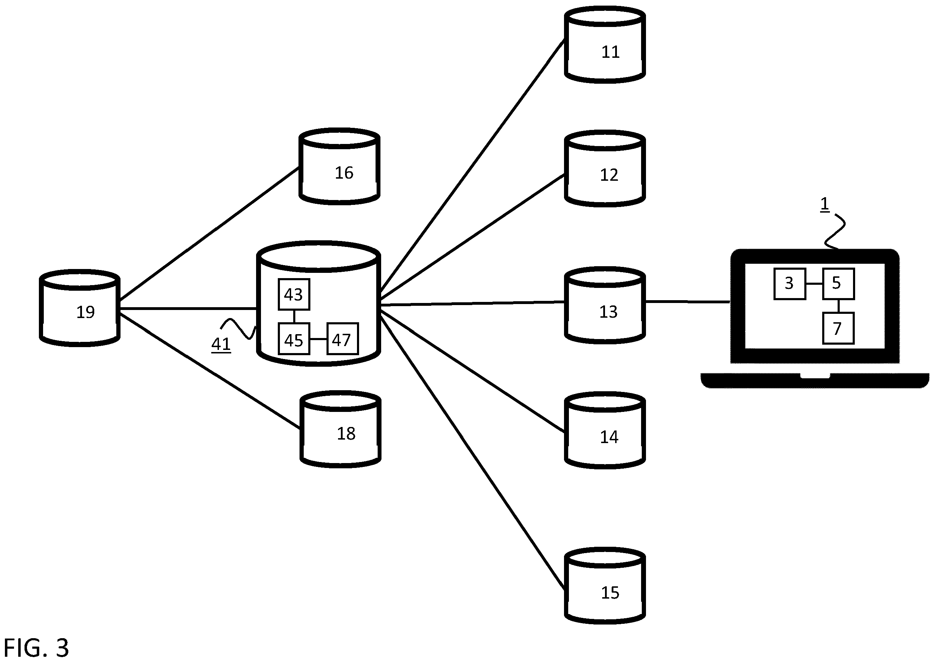

**Fig. 2** shows the invention being implemented in the origin node **31.** The origin node **31** comprise a transceiver **33,** a processor **35** and a memory **37.** **Fig. 3** shows the invention being implemented in the (higher-level) cache node **41.** The (higher-level) cache node **41** comprises a transceiver **43,** a processor **45** and a memory **47.**

In a first embodiment of the origin node **31** and the cache node **41,** the processor **35** and the processor **45** are configured to use the transceiver **33** and the transceiver **43,** respectively, to receive a request to obtain a part of a file from the requestor (the higher-level cache node **17** and the edge cache node **13,** respectively). The request identifies the file and specifies a starting position. The file comprises a plurality of spatial-element frames of a spatial element of a compressed video. The compressed video comprises a plurality of spatial elements.

The processor **35** and the processor **45** are further configured to locate the file in the memory **37** and the memory **47,** respectively, and obtain data from the file located in the memory **37** and **47,** respectively, starting at the specified starting position. The data comprises two or more temporal segments of spatial-element frames relating to at least partly overlapping time periods. The spatial-element frames of the two or more temporal segments each comprise a plurality of video pixels. At least a first one of the two or more temporal segments of spatial-element frames comprise inter-coded spatial-element frames (e.g. P and B frames) and at least a second one of the two or more temporal segments of spatial-element frames comprising only non-inter-coded spatial-element frames (e.g. I frames). The two or more temporal segments are located near each other in the data. The processor **35** and the processor **45** are configured to use the transceiver **33** and the transceiver **43,** respectively, to transmit the data to the requestor (the higher-level cache node **17** and the edge cache node **13,** respectively).

The client device **1** may be a PC, laptop, mobile phone, tablet, or a VR headset, for example. The client device **1** may be connected to a VR headset, for example. In **Fig.1****,** the client device **1** comprises one processor **5.** Alternatively, the client device **1** comprises multiple processors. The processor **5** of the client device **1** may be a general-purpose processor, e.g. an Intel or an AMD processor, or an application-specific processor, for example. The processor **5** may comprise multiple cores, for example. The processor **5** may run a Unix-based (e.g. Android), Windows or Apple operating system, for example.

In **Fig.1****,** a receiver and a transmitter are combined in the transceiver **3** of the client device **1.** Alternatively, the client device **1** comprises a receiver and a transmitter that are separate. The transceiver **3** of the client device **1** may use, for example, one or more wireless communication technologies such as Wi-Fi, Bluetooth, GPRS, CDMA, UMTS and/or LTE and/or one more wired communication technologies such as Ethernet to communicate with other devices on the network, e.g. the edge cache node **13.** There may be other devices in the path between the client device **1** and the origin node **19** that are not depicted in **Fig.1****,** e.g. access points, routers and switches. The memory **7** may comprise solid state memory, e.g. one or more Solid State Disks (SSDs) made out of Flash memory, or one or more hard disks, for example. The client device **1** may comprise other components typical for a client device, e.g. a power supply and/or battery and a display.

The origin node **31** may be a streaming server, for example. In the embodiment shown in **Fig.2****,** the origin node **31** comprises one processor **35.** In an alternative embodiment, the origin node **31** comprises multiple processors. The processor **35** of the origin node **31** may be a general-purpose processor, e.g. an Intel or an AMD processor, or an application-specific processor, for example. The processor **35** may comprise multiple cores, for example. The processor **35** may run a Unix-based or Windows operating system, for example.

In the embodiment shown in **Fig.2****,** a receiver and a transmitter are combined in the transceiver **33** of the origin node **31.** In an alternative embodiment, the origin node **31** comprises a receiver and a transmitter that are separate. The transceiver **33** of the origin node **31** may, for example, use one or more wired communication technologies such Ethernet to communicate with other devices on the Internet, e.g. the higher-layer cache nodes **16-18.** The memory **37** may comprise solid state memory, e.g. one or more Solid State Disks (SSDs) made out of Flash memory, or one or more hard disks, for example. The origin node **31** may comprise other components typical for an origin node, e.g. a power supply. In the embodiment shown in **Fig.2****,** the origin node **31** comprises one device. In an alternative embodiment, the origin node **31** comprise multiple devices.

In the embodiment shown in **Fig.3****,** the higher-layer cache node **41** comprises one processor **45.** In an alternative embodiment, the higher-layer cache node **41** comprises multiple processors. The processor **45** of the higher-layer cache node **41** may be a general-purpose processor, e.g. an Intel or an AMD processor, or an application-specific processor, for example. The processor **45** may comprise multiple cores, for example. The processor **45** may run a Unix-based or Windows operating system, for example.

In the embodiment shown in **Fig.3****,** a receiver and a transmitter are combined in the transceiver **45** of the higher-layer cache node **41.** In an alternative embodiment, the higher-layer cache node **41** comprises a receiver and a transmitter that are separate. The transceiver **47** of the higher-layer cache node **41** may, for example, use one or more wired communication technologies such Ethernet to communicate with other devices on the Internet, e.g. the edge cache node **13** and the origin node 19. The memory **47** may comprise solid state memory, e.g. one or more Solid State Disks (SSDs) made out of Flash memory, or one or more hard disks, for example. The higher-layer cache node **41** may comprise other components typical for a node in a CDN network, e.g. a power supply. In the embodiment shown in **Fig.3****,** the higher-layer cache node **41** comprises one device. In an alternative embodiment, the higher-layer cache node **41** comprise multiple devices. The higher-layer cache node **41** may also have additional network functions, e.g. it may act as a router.

A problem of using conventional HTTP Adaptive Streaming for delivering tiles is the way tiles are spatially and temporally segmented. If a user moves his head at Time T (during which Frame X is displayed to the user), the motion-to-high-res time of the tiled streaming system can be defined as the time it takes to display Frame Y which includes the high-resolutions versions of all the tiles of the new field of view. While there are various factors to that, such as the speed of the video decoder in the client, the depth of the framebuffer and the refresh rate of the VR headset, the most significant element that contributes to motion-to-high-res latency in tiled streaming systems is the time it takes to fetch the new tile data from the network.

The time it takes to complete any type of network request is determined by the following elements:
- The round-trip-time (RTT) to the server (origin node). In other words, the number of milliseconds between sending a negligible small request to the server, and receiving the first byte of the response.
- The size of the total request (in bytes)
- The size of the response (in bytes)
- The bandwidth of the connection between the server and the client

When this is applied to the motion-to-high-res problem, the size of the response can be more clearly defined as 'the size of the response up until the last byte of frame Y'.

Where the RTT and bandwidth can typically be considered fixed on a given connection, and outside the realm of control of the tiled streaming application, the size of the request and the response are in control of the client, and this is exactly where current HTTP Adaptive Streaming applications fail. HTTP Adaptive Streaming segments a video stream up into temporal segments, with each segment being stored as an individual file on the network. With each segment typically having a fixed duration, the size of the network response is determined by the size of the segment. While this is not a problem if the required Frame Y is at the immediate beginning of a segment, this becomes an issue when frame Y is anywhere else in the segment. In such cases, all the bytes of all the frames before Frame Y in the segment will have to be transported before Frame Y itself is retrieved, increasing motion-to-high-res latency significantly. This especially holds when the temporal segments are long, e.g. 10 or 30 seconds (which is common in industry at the moment).

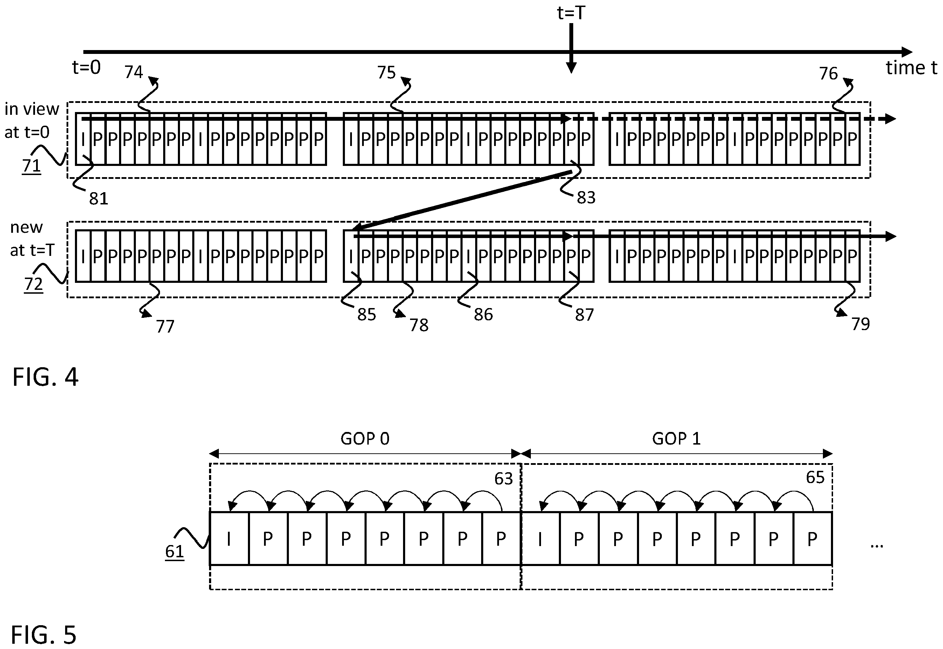

This is illustrated in **Fig. 4****.** A spatial element **71** is in the user's field of view at time t=0. At time t=T, a first temporal segment **74** and part of a second temporal segment **75** of spatial element **71** have been fetched and displayed when a new spatial element **72** comes into the user's field of view. Now, all the spatial-element frames of temporal segment **78** of spatial element **72** have to be retrieved before frame Y, i.e. spatial-element frame **87** of temporal segment **78,** itself is retrieved. Temporal segment **79** of spatial element **72** is retrieved thereafter. If spatial element **71** is still in view, despite the movement that causes spatial element **72** to come into view, temporal segment **76** of spatial element **71** is retrieved as well. Temporal segment **77** of spatial element **72** does not need to be retrieved. Each of the temporal segments **74-79** comprises two intra-coded frames (I) and 15 inter-coded frames (P).

To reduce this latency, the client device is configured to start retrieving frames at any position in the source file instead of cutting up the video into predetermined segments, only retrieving exactly those bytes that are necessary, and thereby not only reducing bandwidth requirements, but also reducing motion-to-high-res latency.

In order to allow for specific byte ranges to be requested, it may be necessary to adapt the file (container) format of the video is adapted. For example, one of the most used container formats for audio/video data is the ISO Base Media File Format (ISOBMFF) on which the MP4 specification is based. In this format, audio/video data is placed into ISOBMFF Boxes (or Atoms). While there exist a huge variety of boxes to describe all kinds of metadata and related information, and a typical ISOBMFF file will contain hundreds of these, the actual audio/video payload data is typically placed in 'mdat' boxes. In general, at least one GOP length of frames, but typically more, and even up to the full length of the content, is stored in a single 'mdat' box. As a result, if the client device can retrieve a single frame, this will not correspond to a full ISOBMFF box. The client device may therefore need to reconstruct a new ISOBMFF box around the retrieved data on the client side in order for it to be able to present the data to the decoder. An alternative solution would be to place each frame in its own ISOBMFF box during the packaging process, although this would mean the amount of ISOBMFF overhead will increase (given that each ISOBMFF box includes headers).

While the method described above allows a client device to have random access to any frame of every spatial element from a network point of view, the specifics of video or audio codec-specific constraints mean that the client device will not necessarily be able to decode all of those frames.

In a very simplified way, the way video compression typically works is by periodically encoding a reference frame, a so-called intra-coded picture (or I-frame), and for each subsequent frame only encoding the difference between that frame, the reference frame and any other frames up until one or more reference frames, which may be in the past or the future with respect to the frame that is required. This is shown in **Fig.5****.** A video **61** comprises a plurality of Groups of Pictures (GOPs), including a Group of Pictures **63** and a Group of Pictures 65. Each Group of Pictures comprises one intra-coded picture and multiple inter-coded pictures. To decode such inter-encoded pictures (which can be P-frames or B-frames), the decoder requires access to the preceding or first-next I-frame, as well as one or more B- frames and/or P-frames.

For tiled streaming, this means that in order to decode frame Y, i.e. spatial element **87** of **Fig. 4****,** the decoder might need to have access to frames Y-1, Y-2 and Y-N (the intra-coded frame **86** of **Fig. 4** and the inter-coded frames between intra-coded frame **86** and frame Y) as well. Even if the number of frames on which frame Y depends is bounded by the so-called GOP-size (for Group of Pictures-size, the size of the group of all frames that depend on each other), each additional frame increases the size of the network request, and thereby the motion-to-high-res latency.

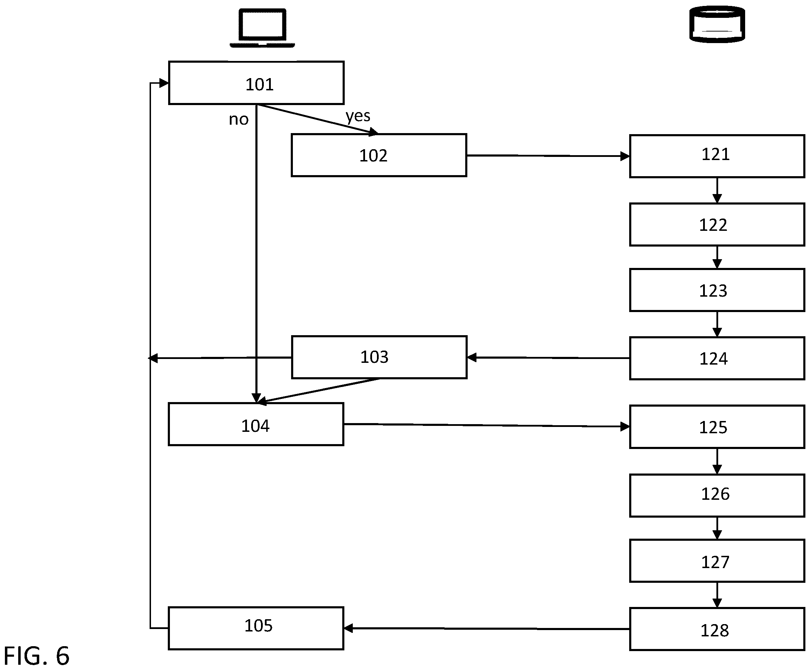

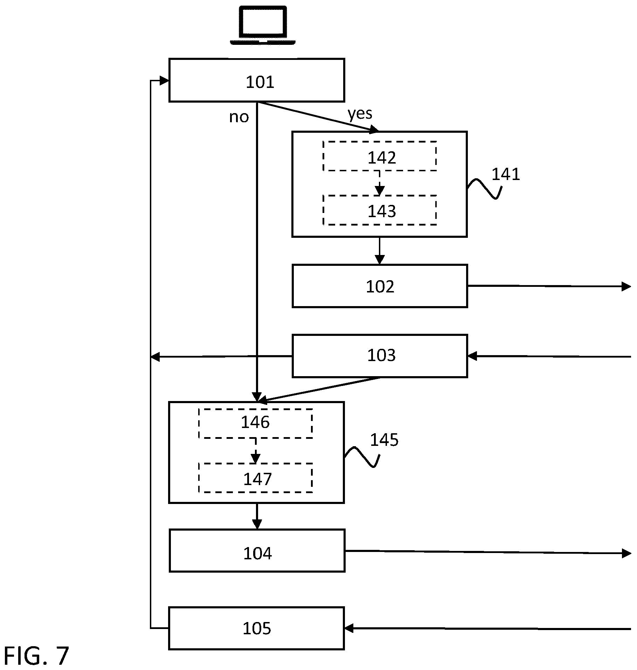

This latency can be reduced by encoding each spatial element at least twice: a main stream with a sufficiently large GOP size to increase maximum compression efficiency, and one I-frame-only stream (also known as intra-only) with a GOP size of 1, which means there are only I-frames and no P-frames, and thus no dependencies between frames. When a new spatial element comes into the user's field of view at a moment that doesn't immediately precede an I-frame, the client device may retrieve the I-frame-only stream up until the moment an I-frame is scheduled to arrive in the main stream, at which point it switches to the main stream (which may be a different representation of the spatial element). This way, the client device is able to start playback from any frame of every spatial element, at the cost of briefly having a somewhat higher bitrate (because the compression efficiency of the I-only stream will be lower). Thus, the method of transmitting a request for video data involves the client device requesting a non-inter-coded high-resolution spatial-element frame that it can display promptly, e.g. within 100ms, for each spatial element of a video in a user's field of view for which a client device does not possess a current high-resolution spatial-element frame. This is described in more detail in relation to **Figs. 6** and **7****.**

A first embodiment of method of the invention is shown in **Fig. 6****.** A step **101** comprises the client device detecting whether the user's field of view has changed. If the user's field of view has not changed, step **104** is performed next. If the user's field of view has changed, step **102** is performed. Step **102** comprises the client device transmitting one or more requests for high-resolution spatial-element frames of the spatial element of the video to a distribution node for each spatial element of a video in a user's field of view for which a client device does not possess a current high-resolution spatial-element frame. The video comprises a plurality of spatial elements and a plurality of spatial-element frames for each of the plurality of spatial elements. The plurality of spatial-element frames comprises both non-inter-coded spatial-element frames and inter-coded spatial-element frames. The one or more requests identifies the spatial element and specifies a starting point corresponding substantially to a current time and the one or more requests being for data comprising a temporal segment of high-resolution spatial-element frames starting substantially at the starting point. The first high-resolution spatial-element frame of the temporal segment of high-resolution spatial-element frames is not inter coded. The spatial-element frames may be HEVC tiles, for example.

*A* step **121** comprises the distribution node receiving the one or more requests. The distribution node may be a cache node or origin node, for example. The starting point may be specified in the request as a point in time, a temporal index value or a position in a file. A step **122** comprises the distribution node locating the requested spatial-element frames of the video in a memory. A step **123** comprises the distribution node obtaining the requested spatial-element frames from the memory. A step **124** comprises transmitting the obtained spatial-element frames to the client device. If the distribution node is not able to locate the requested spatial-element frames in the memory, the distribution node may attempt to obtain the requested spatial-element frames from another distribution node, e.g. if the distribution node is a cache node. This is not depicted in **Fig. 6****.** This other distribution node may perform the same steps **121-124,** but the distribution node will typically request more spatial-element frames from the other distribution node than are requested from it by the client device.

Step **103** comprises the client device receiving the transmitted data from the distribution node in response to the one or more requests for each of the spatial elements for which the one or more requests is transmitted. The data comprises a temporal segment of high-resolution spatial-element frames starting substantially at the starting point. The high-resolution spatial-element frames of the temporal segment each comprise a plurality of video pixels. The first one or more high-resolution spatial-element frames of the temporal segment of spatial-element frames are not inter coded and the first high-resolution spatial-element frame will be obtained from the afore-mentioned I-frame-only stream in most cases. The temporal segment may further comprise inter-coded frames (e.g. P- frames and B-frames) from the afore-mentioned main stream. The non-inter-coded frame directly preceding the first inter-coded frame will typically be obtained from the main stream as well.

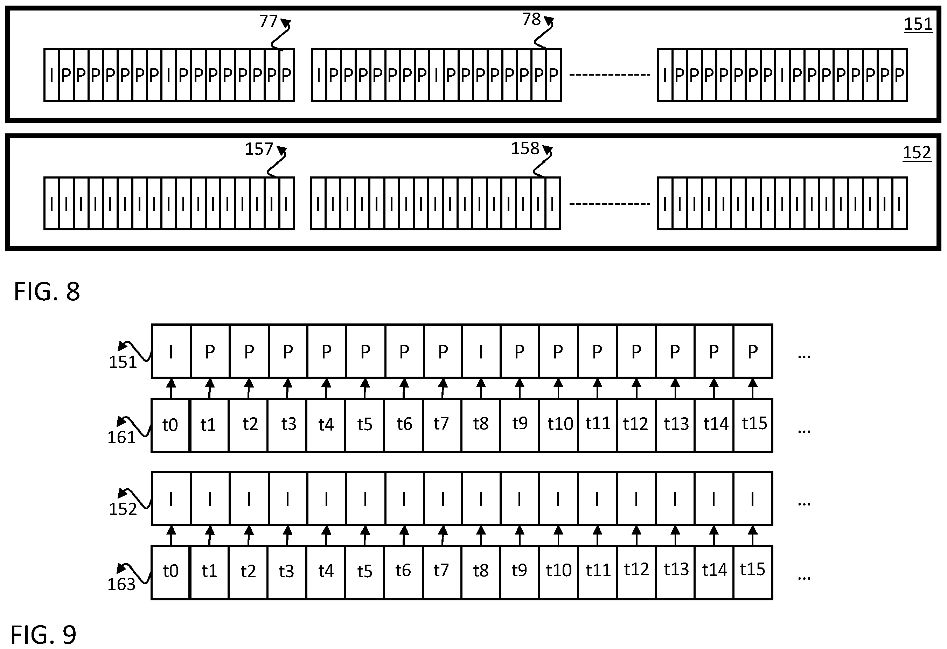

**Fig. 8** shows an example of a packaging of the I-only stream **152** and main stream **151** in two separate containers of a certain temporal length. Headers are not included in **Fig. 8** for clarity. Main stream **151** comprises the temporal segments **77** and **78** of **Fig. 4** and further temporal segments. I-only stream **152** comprises temporal segments **157** and **158** and further temporal segments.

Often, the current view and the previous view will have at least a few spatial elements in common. If so, step **104** is performed next. If not, step **101** is performed again. Step **104** comprises the client device transmitting one or more further requests for spatial-element frames of the spatial element of the video to the distribution node for spatial elements of a video in a user's field of view for which a client device already possesses a current spatial-element frame (because it received them in the current iteration or in a previous iteration of step **103** or in a previous iteration of step **105).** These spatial-element frames are therefore less urgent. The one or more further requests identify the spatial element and specify a further starting point corresponding substantially to a current time.

A step **125** comprises the distribution node receiving the one or more further requests. A step **126** comprises the distribution node locating the requested spatial-element frames of the video in a memory. A step **127** comprises the distribution node obtaining the requested spatial-element frames from the memory. A step **128** comprises transmitting the obtained spatial-element frames to the client device. If the distribution node is not able to locate the requested spatial-element frames in the memory, the distribution node may attempt to obtain the requested spatial-element frames from another distribution node, e.g. if the distribution node is a cache node. This is not depicted in **Fig. 6****.** This other distribution node may perform the same steps **125-128,** but the distribution node will typically request more spatial-element frames from the other distribution node than are requested from it by the client device.

Step **105** comprises the client device receiving the transmitted data from the distribution node in response to the one or more further requests. The received spatial-element frames have been obtained from the main stream. After step **105,** step **101** is performed again. The received data may be decoded and rendered in a further step between step **105** and step **101** (not shown) or by a method performed in parallel, for example.

It may be beneficial to modify the bitstream before passing it to de decoder to make the bitstream valid (again). Most codecs, e.g. HEVC, have some form of positioning information in each NAL header that allows the decoder to know where the particular slice belongs in a larger frame. This positioning information (in HEVC signaled in the `slice_segment address' field), is usually indicated by counting the number of coding tree blocks (or macroblocks) in raster scan order. In viewport-adaptive streaming however, when only a subset of a total panorama is streamed at any given time, the location of a spatial-element frame when presented to the decoder might not match its position in the original bitstream. For example, a spatial element that used to be in the top-left corner of the source panorama, might at some point be in the bottom-right corner of a user's field of view. In addition, a spatial-element that might be in the middle of a viewport at one moment might be at the top of the viewport a few frames later.

Because of this, it is inefficient and often impossible to have a strict relationship between the location of a spatial-element frame in the source panorama, its location in the decoded bitstream and its location in the renderer viewport. Downloaded spatial-element frames may therefore be arbitrarily assigned to positions in the decoded bitstream and the slice_segment_address in the slice header of each spatial-element frame should then be rewritten by the client before the NAL unit is presented to the decoder. When decoding is complete, and a new frame is outputted, the rendering step can make sure that the spatial-element frames are reshuffled to their intended position in the rendered viewport.

The starting point is specified as a position in a file. This is shown in **Fig. 7****.** A step **141** is performed before step **102.** Step **141** comprises determining the starting point by looking up a position in a file by using an index associated with the file. The position corresponds substantially to a current time and the index comprises a mapping from a point in time or a temporal index value to a position in the file.

For example, the spatial-element frames may be stored in a (containerized) format on a server along with an index file that allows accurate retrieval of only those data bytes belonging to a certain video frame. An embodiment of this mechanism is an index containing the byte ranges of all the frames in a certain file. After retrieving the index, the client can use HTTP Byte Range Requests for full random access to each frame (including but not limited to audio, video, subtitles and other sorts of metadata) stored on the server.

If the I-only and main streams are packaged in two separate containers, as shown in **Fig. 8****,** preferably two indices are used and step **141** comprises a sub step **142** of selecting one index from the plurality of indices associated with the two files. The two indices each comprise a mapping from a point in time or a temporal index value to a position in the two files. Step **141** then further comprises a sub step **143** of looking up the position in the two files by using the selected index. The position corresponds to a position of a non-inter-coded spatial-element frame in the one or more files. A step **145** is performed before step **104.** Step **145** comprises determining the further starting point (to be specified in the one or more further requests transmitted in step **104)** by looking up a position in a file in a sub step **147** by using another one of the plurality of indices, selected in a sub step **146.**

The main stream **151** and the I-only stream **152** of **Fig. 8** are shown in **Fig. 9** along with the associated indices. Index **161** is associated with main stream **151.** Index **163** is associated with I-only stream **152.** The indices comprise index data describing the byte offsets for each of the spatial-element frames of the streams. The point in time (t0,...t15,...tn) may be an elapsed time or elapsed frame count since the start of the video, for example.

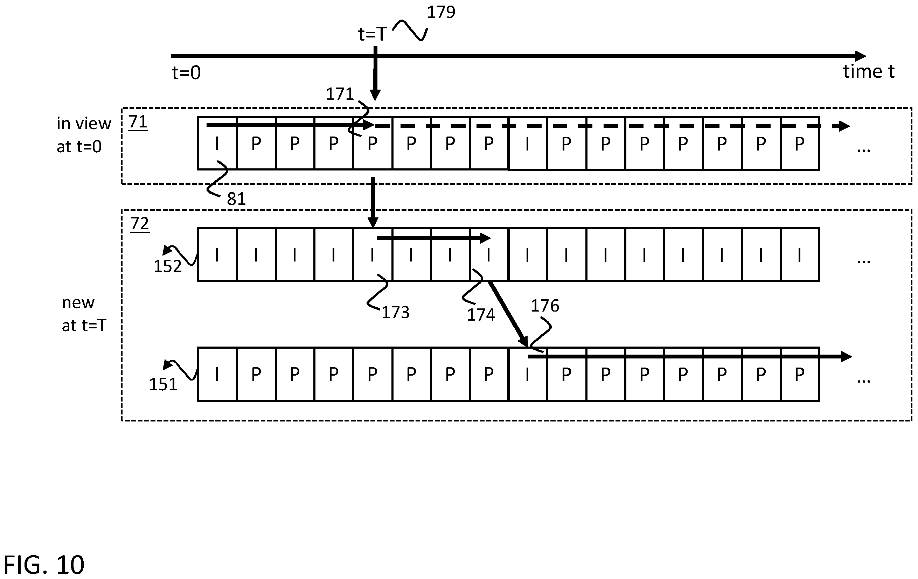

**Fig. 10** shows a spatial-element frame **171** of the spatial element **71** of **Fig. 4** being decoded when at time t=T, i.e. time **179,** a spatial element **72** comes into view. First, I-frame **173,** I-frame **174** and the I-frames between I-frame **173** and I-frame **174** of the intra-encoded stream **152** of spatial element **72** are decoded before switching to the main (IPP encoded) stream **151** of spatial element **72** and decoding I-frame **176.** If spatial element **71** is still in view, despite the movement that causes spatial element **72** to come into view, the spatial-element frames after spatial-element frame **171** are retrieved as well.

Since a frame is typically obsolete after 40ms (25fps) or 33.33ms (30fps), upscaled versions of low-resolution spatial-element frames from a fallback layer may be displayed if the requested one or more high-resolution spatial-element frames are not received before the next spatial-element frame needs to be displayed. The client device may be able to calculate an average round-trip-time and if this average round-trip-time is more than a frame duration (e.g. more than 40ms), not request a temporal segment starting with the current high-resolution spatial-element frame, but with the high-resolution spatial-element frame after the current high-resolution spatial-element frame. Which high-resolution spatial-element frame is requested as first frame may be determined based on the average round-trip-time, for example.

Variations of this mechanism can exist in which not two streams are used (I and IPP) per spatial element but many IPP streams per spatial element, staggered in time, and only one I-only stream per spatial element. Such variations could be used to reduce the time spent in the I-only stream by switching to the first IPP stream of which an I-frame can be displayed. This will reduce bandwidth spikes due to I-frame only streaming but requires more storage on the network and more encoding resources to create the content. Other ways to reduce the I-frame spike could be to stream reference frames (I-frames) at a fraction (e.g. half) of the framerate of the original stream and locally interpolate them in the temporal domain to match the original framerate. This will reduce the network stress but will also reduce the end user experience.

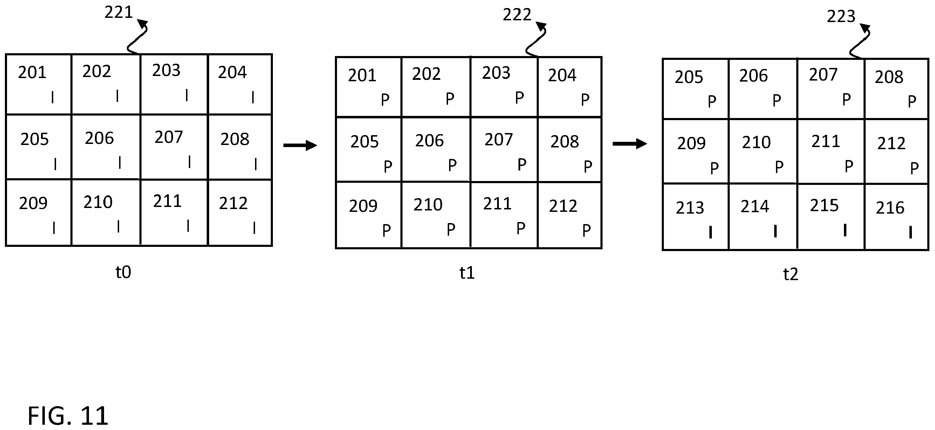

What happens when a user's field of view changes is further illustrated with the help of **Fig. 11****.** An initial view **221** is shown to the user at time t=t0. A view **222** is shown to the user at time t=t1. A view **223** is shown to the user at time t=t2. I-frames of spatial elements **201-212** are decoded in order to show initial view **221.** Since view **222** has the same spatial elements **201-212** as initial view **221,** P-frames of the spatial elements **201-212** can be fetched and decoded, as the client device possesses the necessary I-frames. The user changes his (field of) view between time t1 and time t2 by looking down. As a result, new spatial elements **213-216** come into view, i.e. are present in view **223.** To ensure that high-res frames can be displayed fast enough, I-frames are fetched and decoded for these spatial elements **213-216.** For the existing spatial elements **205-212,** P-frames can be fetched and decoded, as the client device possesses the necessary I-frames.

As previously described, **Fig. 8** shows each video stream being packaged in two different containers of a certain temporal length. By instead packaging the main stream (containing both I-frames and P-frames) and the I only-stream in the same package, with a certain interleaving, both the frequency with which the main stream is accessed and the afore-mentioned CDN-internal chunking behavior can be exploited to increase the chances of the I-only-stream being cached in the CDN edge cache. In other words, the container comprises two or more temporal segments of spatial-element frames relating to at least partly overlapping time periods for a plurality of time periods, at least a first one of the two or more temporal segments of spatial-element frames comprises inter-coded spatial-element frames and at least a second one of the two or more temporal segments of spatial-element frames comprises only non-inter-coded spatial-element frames. The two or more temporal segments are stored near each other in the file, thereby resulting in the certain interleaving.

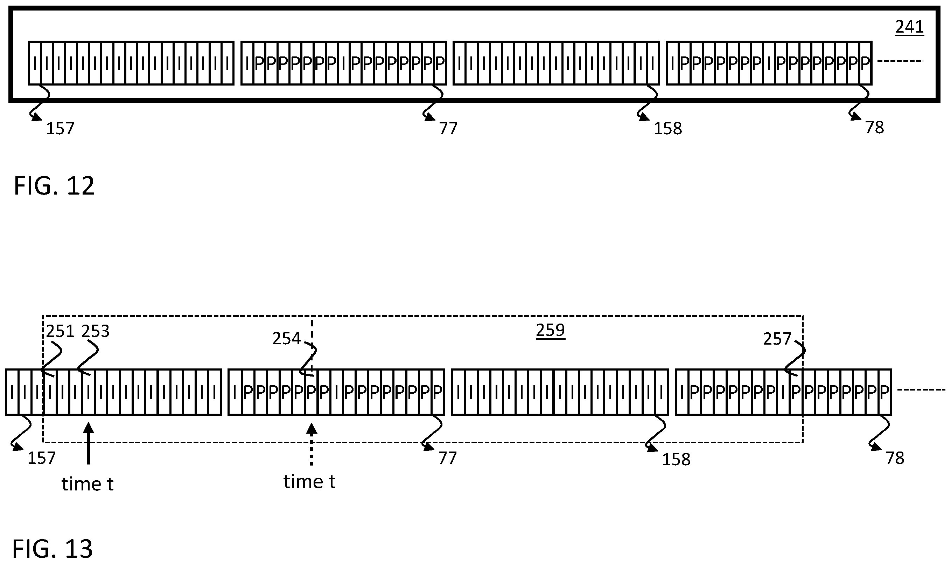

An example of such packaging is shown in **Fig. 12. Fig. 12** shows an enhanced packaging of the I-only and main (IPP) streams in a single container **241** of a certain temporal length. Temporal segments **157** and **158** are part of the I-only stream and temporal segments **77** and **78** are part of the main stream. Headers are not included in **Fig. 12** for clarity. Other options exist to structure this interleaved stream in a container while still exploiting the afore-mentioned CDN chunking behavior. This form of packaging not only improves the chances of the I-only-stream being cached, it also makes sure that whenever the I-only-stream is cached, the frames of the IPP stream that directly follow it will be cached as well, which is especially useful in cases where the client jumps in at one of the last frames of the GOP.

A third advantage of this form of packaging is the way in which it reduces the total number of independent HTTP Requests that have to be carried out. Normally, with the main stream and I-only stream being packaged independently, this would result in at least two separate HTTP requests. With the improved packaging, this is reduced to one single request. This not only reduces overhead and network traffic, it is also beneficial for prioritization purposes. If the client device sends both requests at the same time (not knowing whether either is cached or not), the frames being returned from the main stream will compete for bandwidth with the streams being requested from the I-only-stream, despite the latter frames being required earlier. In the new situation, since they are part of the same request, they will be returned sequentially and in-order, thereby further reducing the chances of a high motion-to-high-res latency.

**Fig. 13** shows a chunk **259** retrieved by a cache node. The chunk **259** comprises the temporal segments **77** and **158** and part of the temporal segments **157** and **78** of **Fig. 12** and thus a combination of I and IPP frames. The chunk **259** is retrieved by the cache node when the client device transmits a request specifying the position of P-frame **254** at time t as starting position and the cache node does not have the requested spatial-element frames in its (cache) memory. The chunk **259** comprises a part before the P-frame **254,** starting with I-frame **251,** and a part after the P-frame **254,** ending with P-frame **257.** The chunk **259** not only comprises the requested P-frame **254** at time t, but also the corresponding I-frame **253** at time t. Since frames from the main stream are requested more often than frames from the I-only stream, this results in a larger probability that frames from the I-only stream will be cache at the edge cache node. Headers are not included in **Fig. 13** for the sake of clarity.

This packaging can be applied to different file formats. For example, it may be implemented in a generic ISOBMFF container or in an MP4 container. In this case, the ISOBMFF/MP4 packager may be instructed that it should use a specific interleaving mechanism, and the different ISOBMFF boxes/atoms may be interleaved accordingly. As another example, an MPEG2-TS container may be used and the different streams may be multiplexed according to the chosen interleaving mechanism.

This packaging can be used in a further embodiment of the method of transmitting the video data. In this further embodiment, the data obtained in steps **123** and **127** of **Fig. 6** and transmitted in a signal in steps **124** and **128** (and/or in the equivalent steps performed by another distribution node, as described in relation to **Fig. 6****)** comprises two or more temporal segments of spatial-element frames relating to at least partly overlapping time periods. The spatial-element frames of the two or more temporal segments each comprise a plurality of video pixels. At least a first one of the two or more temporal segments of spatial-element frames comprises inter-coded spatial-element frames and at least a second one of the two or more temporal segments of spatial-element frames comprises only non-inter-coded spatial-element frames. The two or more temporal segments are located near each other in the data. The packaging of **Fig. 12** meets these requirements. If the request further specifies an ending position, step **123** comprises obtaining the data from the specified starting position until the specified ending position. This method may be performed by an edge cache node, higher-level cache node or origin node, for example.

As shown in **Fig. 12****,** the two or more temporal segments of spatial-element frames may substantially correspond to the same uncompressed video data, the two or more temporal segments of spatial-element frames may be stored sequentially in the file and the first one of the two or more temporal segments of spatial-element frames comprises, for example, at most one or two non-inter-coded spatial-element frames.

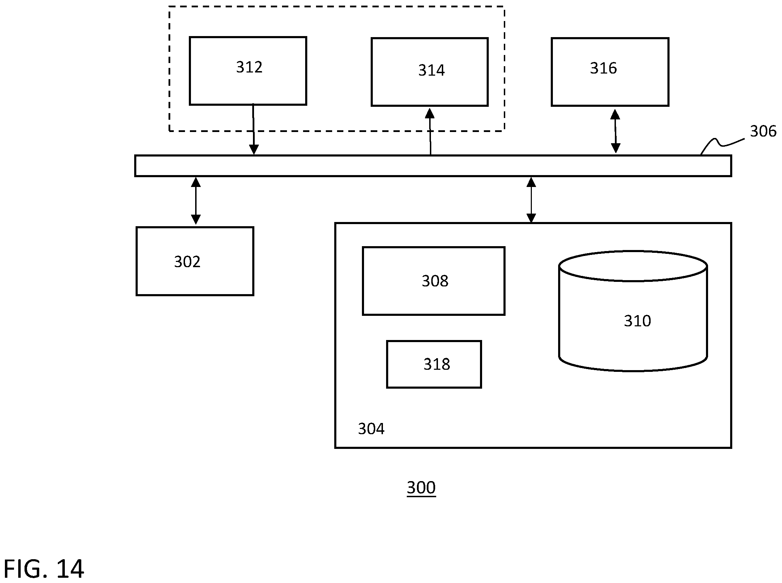

**Fig. 14** depicts a block diagram illustrating an exemplary data processing system that may perform the methods as described with reference to **Figs. 6-7****.**

As shown in **Fig. 14****,** the data processing system **300** may include at least one processor **302** coupled to memory elements **304** through a system bus **306.** As such, the data processing system may store program code within memory elements **304.** Further, the processor **302** may execute the program code accessed from the memory elements **304** via a system bus **306.** In one aspect, the data processing system may be implemented as a computer that is suitable for storing and/or executing program code. It should be appreciated, however, that the data processing system **300** may be implemented in the form of any system including a processor and a memory that is capable of performing the functions described within this specification.

The memory elements **304** may include one or more physical memory devices such as, for example, local memory **308** and one or more bulk storage devices **310.** The local memory may refer to random access memory or other non-persistent memory device(s) generally used during actual execution of the program code. A bulk storage device may be implemented as a hard drive or other persistent data storage device. The processing system **300** may also include one or more cache memories (not shown) that provide temporary storage of at least some program code in order to reduce the number of times program code must be retrieved from the bulk storage device **310** during execution.

Input/output (I/O) devices depicted as an input device **312** and an output device **314** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 14** with a dashed line surrounding the input device **312** and the output device **314).** An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **316** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **300,** and a data transmitter for transmitting data from the data processing system **300** to said systems, devices and/or networks. Modems, cable modems, and Ethernet cards are examples of different types of network adapter that may be used with the data processing system **300.**

As pictured in **Fig. 14****,** the memory elements **304** may store an application **318.** In various embodiments, the application **318** may be stored in the local memory **308,** he one or more bulk storage devices **310,** or separate from the local memory and the bulk storage devices. It should be appreciated that the data processing system **300** may further execute an operating system (not shown in **Fig. 14****)** that can facilitate execution of the application **318.** The application **318,** being implemented in the form of executable program code, can be executed by the data processing system **300,** e.g., by the processor **302.** Responsive to executing the application, the data processing system **300** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **302** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention as defined in the appended claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of transmitting video data, comprising:
- receiving (121) a request to obtain a part of a file (241) from a requestor, said request identifying said file (241), said file (241) comprising a plurality of spatial-element frames of a spatial element of a compressed video, said compressed video comprising a plurality of spatial elements;
- locating (122) said file (241) in a memory;
- obtaining (123) data from said file (241) located in said memory; and
- transmitting (124) said data to said requestor,
**characterized in that** said requestor is a cache node, said request specifies a starting position (251) in said file (241) and further specifies an ending position (257) in said file (241), said data is obtained from said specified starting position (251) until said specified ending position (257), said request is transmitted by said cache node upon receiving a client request from a client device and determining that there is a cache miss, and
said data comprises two or more temporal segments (77, 157) of spatial-element frames of the same resolution relating to at least partly overlapping time periods, said spatial-element frames of said two or more temporal segments each comprising a plurality of video pixels, at least a first one (77) of said two or more temporal segments of spatial-element frames comprising inter-coded spatial-element frames and at least a second one (157) of said two or more temporal segments of spatial-element frames comprising only intra-coded spatial-element frames, said intra-coded spatial-element frames not being encoded with reference to one or more other spatial-element frames of said plurality of spatial-element frames,
wherein said two or more temporal segments (77, 157) of spatial-element frames are stored within a distance of a Content Delivery Network chunk size of each other in said file (241), said two or more temporal segments (77, 157) are located within a distance of a Content Delivery Network chunk size of each other in said transmitted data, a size of each of said two or more temporal segments depends on said Content Delivery Network chunk size, the difference between said ending position (257) and said starting position (251) is a multiple of said Content Delivery Network chunk size, and a byte range specified in said client request lies between said starting position (251) and said ending position (257).

2. A method as claimed in claim 1, wherein said two or more temporal segments (77, 157) of spatial-element frames are stored sequentially in said file (241) and said two or more temporal segments (77, 157) are located sequentially in said transmitted data.

3. A method as claimed in any one of claims 1 or 2, wherein said request specifies a further starting position and further comprising:
- obtaining (127) further data from said file located in said memory starting at said specified further starting position, said further data comprising two or more further temporal segments of spatial-element frames relating to at least partly overlapping time periods, said spatial-element frames of said two or more further temporal segments each comprising a plurality of video pixels, at least a first one of said two or more further temporal segments of spatial-element frames comprising inter-coded spatial-element frames and at least a second one of said two or more further temporal segments of spatial-element frames comprising only intra-coded spatial-element frames; and
- transmitting (128) said further data to said cache node.

4. A computer program or suite of computer programs comprising at least one software code portion or a computer program product storing at least one software code portion, the software code portion, when run on a computer system, being configured for performing the method of any one of claims 1 to 3.

5. A distribution node (31, 41), comprising:
at least one receiver (33, 43);
at least one transmitter (33, 43); and
at least one processor (35, 45) configured to:
- use said at least one receiver (33, 43) to receive a request to obtain a part of a file from a requestor (1, 17), said request identifying said file, said file comprising a plurality of spatial-element frames of a spatial element of a compressed video, said compressed video comprising a plurality of spatial elements,
- locate said file in a memory (37, 47),
- obtain data from said file located in said memory (37, 47), and
- use said at least one transmitter (33, 43) to transmit said data to said requestor (1, 17),
**characterized in that** said requestor is a cache node, said request specifies a starting position in said file and further specifies an ending position in said file, said data is obtained from said specified starting position until said specified ending position, said request is transmitted by said cache node upon receiving a client request from a client device and determining that there is a cache miss, and
said data comprises two or more temporal segments of spatial-element frames of the same resolution relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only intra-coded spatial-element frames, said intra-coded spatial-element frames not being encoded with reference to one or more other spatial-element frames of said plurality of spatial-element frames,
wherein said two or more temporal segments of spatial-element frames are stored within a distance of a Content Delivery Network chunk size of each other in said file, said two or more temporal segments are located within a distance of a Content Delivery Network chunk size of each other in said transmitted data, a size of each of said two or more temporal segments depends on said Content Delivery Network chunk size, the difference between said ending position (257) and said starting position (251) is a multiple of said Content Delivery Network chunk size, and a byte range specified in said client request lies between said starting position (251) and said ending position (257).

6. A distribution node as claimed in claim 5, wherein said two or more temporal segments of spatial-element frames are stored sequentially in said file and said two or more temporal segments are located sequentially in said transmitted data.

## Patentansprüche

1. Verfahren zur Übertragung von Videodaten, das aufweist:
- Empfangen (121) einer Anforderung, um einen Teil einer Datei (241) zu erhalten, von einem Anfordernden, wobei die Anforderung die Datei (241) identifiziert, wobei die Datei (241) mehrere räumliche Elementrahmen eines räumlichen Elements eines komprimierten Videos aufweist, wobei das komprimierte Video mehrere räumliche Elemente aufweist,
- Ausfindigmachen (122) der Datei (241) in einem Speicher;
- Erhalten (123) von Daten aus der in dem Speicher angeordneten Datei (241); und
- Übertragen (124) der Daten an den Anfordernden,
**dadurch gekennzeichnet, dass** der Anfordernde ein Cache-Knoten ist, die Anforderung eine Anfangsposition (251) in der Datei (241) spezifiziert und ferner eine Endposition (257) in der Datei (241) spezifiziert, wobei die Daten von der spezifizierten Anfangsposition (251) bis zu der spezifizierten Endposition (257) erhalten werden, wobei die Anforderung von dem Cache-Knoten nach Empfang einer Client-Anforderung von einer Client-Vorrichtung und der Bestimmung, dass es einen Cache-Miss gibt, übertragen wird, und
die Daten zwei oder mehr zeitliche Segmente (77, 157) von räumlichen Elementrahmen mit der gleichen Auflösung aufweisen, die wenigstens teilweise überlappende Zeitspannen betreffen, wobei die räumlichen Elementrahmen der zwei oder mehr zeitlichen Segmente jeweils mehrere Videopixel aufweisen, wobei wenigstens ein erstes (77) der zwei oder mehr zeitlichen Segmente der räumlichen Elementrahmen zwischenkodierte räumliche Elementrahmen aufweisen und wenigstens ein zweites (157) der zwei oder mehr zeitlichen Segmente der räumlichen Elementrahmen nur intrakodierte räumliche Elementrahmen aufweist, wobei die intrakodierten räumlichen Elementrahmen nicht unter Bezug auf einen oder mehrere andere räumliche Elementrahmen der mehreren räumlichen Elementrahmen kodiert werden,
wobei die zwei oder mehr zeitlichen Segmente (77, 157) der räumlichen Elementrahmen innerhalb eines Blockgrößenabstands eines Netzwerks für Inhaltsbereitstellung voneinander in der Datei (241) gespeichert sind, wobei zwei oder mehr zeitliche Segmente (77, 157) innerhalb eines Blockgrößenabstands des Netzwerks für Inhaltsbereitstellung voneinander in den übertragenen Daten angeordnet sind, wobei eine Größe jedes der zwei oder mehr zeitlichen Segmente von der Blockgröße des Netzwerks für Inhaltsbereitstellung abhängt, wobei die Differenz zwischen der Endposition (257) und der Anfangsposition (251) ein Vielfaches der Blockgröße des Netzwerks für Inhaltsbereitstellung ist und ein in der Client-Anforderung spezifizierter Bytebereich zwischen der Anfangsposition (251) und der Endposition (257) liegt.

2. Verfahren nach Anspruch 1, wobei die zwei oder mehr zeitlichen Segmente (77, 157) räumlicher Elementrahmen nacheinander in der Datei (241) gespeichert werden und die zwei oder mehr zeitlichen Segmente (77, 157) nacheinander in den übertragenen Daten angeordnet werden.

3. Verfahren nach einem der Ansprüche 1 oder 2, wobei die Anforderung eine weitere Startposition spezifiziert und ferner aufweist:
- Erhalten (127) weiterer Daten von der in dem Speicher angeordneten Datei, beginnend an der spezifizierten weiteren Anfangsposition, wobei die weiteren Daten zwei oder mehr weitere zeitliche Segmente räumlicher Elementrahmen, die wenigstens teilweise überlappende Zeitspannen betreffen aufweisen, wobei die räumlichen Elementrahmen der zwei oder mehr weiteren zeitlichen Segmente jeweils mehrere Videopixel aufweisen, wobei wenigstens ein erstes der zwei oder mehr weiteren zeitlichen Segmente von räumlichen Elementrahmen zwischenkodierte räumliche Elementrahmen aufweist und wenigstens ein zweites der zwei oder mehr weiteren zeitlichen Segmente der räumlichen Elementrahmen nur intrakodierte räumliche Elementrahmen aufweist, und
- Übertragen (128) der weiteren Daten an den Cache-Knoten.

4. Computerprogramm oder Folge von Computerprogrammen, das/die wenigstens einen Softwarekodeabschnitt oder ein Computerprogrammprodukt aufweisen, das wenigstens einen Softwarekodeabschnitt speichert, wobei der Softwarekodeabschnitt, wenn er auf einem Computersystem läuft, konfiguriert ist, um das Verfahren nach einem der Ansprüche 1 bis 3 durchzuführen.

5. Verteilungsknoten (31, 41), der aufweist:
wenigstens einen Empfänger (33, 43);
wenigstens einen Sender (33, 43); und
wenigstens einen Prozessor (35, 45), der konfiguriert ist, um:
- den wenigstens einen Empfänger (33, 43) zu verwenden, um eine Anforderung für den Erhalt eines Teils einer Datei von einem Anfordernden (1, 17) zu empfangen, wobei die Anforderung die Datei identifiziert, wobei die Datei mehrere räumliche Elementrahmen eines räumlichen Elements eines komprimierten Videos aufweist, wobei das komprimierte Video mehrere räumliche Elemente aufweist,
- Ausfindigmachen der Datei in einem Speicher (37, 47);
- Erhalten von Daten aus der in dem Speicher (37, 47) angeordneten Datei; und
- Verwenden wenigstens eines Senders (33, 43), um Daten an den Anfordernden (1, 17) zu übertragen,
**dadurch gekennzeichnet, dass** der Anfordernde ein Cache-Knoten ist, die Anforderung eine Anfangsposition in der Datei spezifiziert und ferner eine Endposition in der Datei spezifiziert, wobei die Daten von der spezifizierten Anfangsposition bis zu der spezifizierten Endposition erhalten werden, wobei die Anforderung von dem Cache-Knoten nach Empfang einer Client-Anforderung von einer Client-Vorrichtung und der Bestimmung, dass es einen Cache-Miss gibt, übertragen wird, und die Daten zwei oder mehr zeitliche Segmente von räumlichen Elementrahmen mit der gleichen Auflösung aufweisen, die wenigstens teilweise überlappende Zeitspannen betreffen, wobei die räumlichen Elementrahmen der zwei oder mehr zeitlichen Segmente jeweils mehrere Videopixel aufweisen, wobei wenigstens ein erstes der zwei oder mehr zeitlichen Segmente der räumlichen Elementrahmen zwischenkodierte räumliche Elementrahmen aufweisen und wenigstens ein zweites der zwei oder mehr zeitlichen Segmente der räumlichen Elementrahmen nur intrakodierte räumliche Elementrahmen aufweist, wobei die intrakodierten räumlichen Elementrahmen nicht unter Bezug auf einen oder mehrere andere räumliche Elementrahmen der mehreren räumlichen Elementrahmen kodiert werden,
wobei die zwei oder mehr zeitlichen Segmente der räumlichen Elementrahmen innerhalb eines Blockgrößenabstands eines Netzwerks für Inhaltsbereitstellung voneinander in der Datei gespeichert sind, wobei zwei oder mehr zeitliche Segmente innerhalb eines Blockgrößenabstands des Netzwerks für Inhaltsbereitstellung voneinander in den übertragenen Daten angeordnet sind, wobei eine Größe jedes der zwei oder mehr zeitlichen Segmente von der Blockgröße des Netzwerks für Inhaltsbereitstellung abhängt, wobei die Differenz zwischen der Endposition (257) und der Anfangsposition (251) ein Vielfaches der Blockgröße des Netzwerks für Inhaltsbereitstellung ist und ein in der Client-Anforderung spezifizierter Bytebereich zwischen der Anfangsposition (251) und der Endposition (257) liegt.

6. Verteilungsknoten nach Anspruch 5, wobei die zwei oder mehr zeitlichen Segmente räumlicher Elementrahmen nacheinander in der Datei gespeichert werden und die zwei oder mehr zeitlichen Segmente nacheinander in den übertragenen Daten angeordnet werden.

## Revendications

1. Procédé d'émission de données vidéo, comprenant :
- la réception (121) d'une requête d'obtention d'une partie d'un fichier (241) provenant d'un requérant, ladite requête identifiant ledit fichier (241), ledit fichier (241) comprenant une pluralité de trames d'élément spatial d'un élément spatial d'une vidéo compressée, ladite vidéo compressée comprenant une pluralité d'éléments spatiaux ;
- la localisation (122) dudit fichier (241) dans une mémoire ;
- l'obtention (123) de données provenant dudit fichier (241) situé dans ladite mémoire ; et
- l'émission (124) desdites données vers ledit requérant, **caractérisé en ce que** ledit requérant est un noeud d'antémémoire, ladite requête spécifie une position de début (251) dans ledit fichier (241) et spécifie en outre une position de fin (257) dans ledit fichier (241), lesdites données sont obtenues de ladite position de début (251) spécifiée à ladite position de fin (257) spécifiée, ladite requête est émise par ledit noeud d'antémémoire lors de la réception d'une requête client provenant d'un dispositif client et de la détermination qu'il existe un défaut d'antémémoire, et
lesdites données comprennent deux segments temporels (77, 157) ou plus de trames d'élément spatial de la même résolution se rapportant à des périodes temporelles se chevauchant au moins partiellement, lesdites trames d'élément spatial desdits deux segments temporels ou plus comprenant chacune une pluralité de pixels vidéo, au moins un premier (77) desdits deux segments temporels ou plus de trames d'élément spatial comprenant des trames d'élément spatial inter-codées et au moins un second (157) desdits deux segments temporels ou plus de trames d'élément spatial comprenant uniquement des trames d'élément spatial intra-codées, lesdites trames d'élément spatial intra-codées n'étant pas codées en référence à une ou plusieurs autres trames d'élément spatial de ladite pluralité de trames d'élément spatial,
dans lequel lesdits deux segments temporels (77, 157) ou plus de trames d'élément spatial sont stockés dans les limites d'une distance d'une taille de bloc de réseau de diffusion de contenu les uns des autres dans ledit fichier (241), lesdits deux segments temporels (77, 157) ou plus sont situés dans les limites d'une distance d'une taille de bloc de réseau de diffusion de contenu les uns des autres dans lesdites données émises, une taille de chacun desdits deux segments temporels ou plus dépend de ladite taille de bloc de réseau de diffusion de contenu, la différence entre ladite position de fin (257) et ladite position de début (251) est un multiple de ladite taille de bloc de réseau de diffusion de contenu, et une plage d'octet spécifiée dans ladite requête client se trouve entre ladite position de début (251) et ladite position de fin (257).

2. Procédé selon la revendication 1, dans lequel lesdits deux segments temporels (77, 157) ou plus de trames d'élément spatial sont stockés en séquence dans ledit fichier (241) et lesdits deux segments temporels (77, 157) ou plus sont situés en séquence dans lesdites données émises.

3. Procédé selon l'une quelconque des revendications 1 ou 2, dans lequel ladite requête spécifie une position de début supplémentaire et comprenant en outre :
- l'obtention (127) de données supplémentaires provenant dudit fichier situé dans ladite mémoire débutant à ladite position de début supplémentaire spécifiée, lesdites données supplémentaires comprennent deux segments temporels supplémentaires ou plus de trames d'élément spatial se rapportant à des périodes temporelles se chevauchant au moins partiellement, lesdites trames d'élément spatial desdits deux segments temporels supplémentaires ou plus comprenant chacune une pluralité de pixels vidéo, au moins un premier desdits deux segments temporels supplémentaires ou plus de trames d'élément spatial comprenant des trames d'élément spatial inter-codées et au moins un second desdits deux segments temporels supplémentaires ou plus de trames d'élément spatial comprenant uniquement des trames d'élément spatial intra-codées ; et
- l'émission (128) desdites données supplémentaires vers ledit noeud d'antémémoire.

4. Programme d'ordinateur ou suite de programmes d'ordinateur comprenant au moins une portion de code logiciel ou un produit programme d'ordinateur stockant au moins une portion de code logiciel, la portion de code logiciel, lors de son exécution sur un système d'ordinateur, étant configurée pour la réalisation du procédé selon l'une quelconque des revendications 1 à 3.

5. Noeud de distribution (31, 41), comprenant :
au moins un récepteur (33, 43) ;
au moins un émetteur (33, 43) ; et
au moins un processeur (35, 45) configuré pour :
- utiliser ledit au moins un récepteur (33, 43) pour recevoir une requête d'obtention d'une partie d'un fichier provenant d'un requérant (1, 17), ladite requête identifiant ledit fichier, ledit fichier comprenant une pluralité de trames d'élément spatial d'un élément spatial d'une vidéo compressée, ladite vidéo compressée comprenant une pluralité d'éléments spatiaux,
- localiser ledit fichier dans une mémoire (37, 47),
- obtenir des données provenant dudit fichier situé dans ladite mémoire (37, 47), et
- utiliser ledit au moins un émetteur (33, 43) pour émettre lesdites données vers ledit requérant (1, 17),
**caractérisé en ce que** ledit requérant est un noeud d'antémémoire, ladite requête spécifie une position de début dans ledit fichier et spécifie en outre une position de fin dans ledit fichier, lesdites données sont obtenues de ladite position de début spécifiée à ladite position de fin spécifiée, ladite requête est émise par ledit noeud d'antémémoire lors de la réception d'une requête client provenant d'un dispositif client et de la détermination qu'il existe un défaut d'antémémoire, et
lesdites données comprennent deux segments temporels ou plus de trames d'élément spatial de la même résolution se rapportant à des périodes temporelles se chevauchant au moins partiellement, lesdites trames d'élément spatial desdits deux segments temporels ou plus comprenant chacune une pluralité de pixels vidéo, au moins un premier desdits deux segments temporels ou plus de trames d'élément spatial comprenant des trames d'élément spatial inter-codées et au moins un second desdits deux segments temporels ou plus de trames d'élément spatial comprenant uniquement des trames d'élément spatial intra-codées, lesdites trames d'élément spatial intra-codées n'étant pas codées en référence à une ou plusieurs autres trames d'élément spatial de ladite pluralité de trames d'élément spatial,
dans lequel lesdits deux segments temporels ou plus de trames d'élément spatial sont stockés dans les limites d'une distance d'une taille de bloc de réseau de diffusion de contenu les uns des autres dans ledit fichier, lesdits deux segments temporels ou plus sont situés dans les limites d'une distance d'une taille de bloc de réseau de diffusion de contenu les uns des autres dans lesdites données émises, une taille de chacun desdits deux segments temporels ou plus dépend de ladite taille de bloc de réseau de diffusion de contenu, la différence entre ladite position de fin (257) et ladite position de début (251) est un multiple de ladite taille de bloc de réseau de diffusion de contenu, et une plage d'octet spécifiée dans ladite requête client se trouve entre ladite position de début (251) et ladite position de fin (257).

6. Noeud de distribution selon la revendication 5, dans lequel lesdits deux segments temporels ou plus de trames d'élément spatial sont stockés en séquence dans ledit fichier et lesdits deux segments temporels ou plus sont situés en séquence dans lesdites données émises.
